# EUROPEAN PATENT SPECIFICATION

(11) **EP 1 962 655 B1**
(45) Date of publication and mention of the grant of the patent: **21.07.2010**
(21) Application number: 06832106.6
(22) Date of filing: 06.12.2006
(51) Int. Cl.: A47J 31/44

(54) **BEVERAGE PREPARATION MACHINE HAVING A LIQUID LEVEL SENSOR**
GETRÄNKEZUBEREITUNGSMASCHINE MIT EINEM FLÜSSIGKEITSPEGELSENSOR
MACHINE DE PRÉPARATION DE BOISSONS AVEC CAPTEUR DE NIVEAU DE LIQUIDE

(30) Priority: 15.12.2005 EP 05112237
(43) Date of publication of application: 03.09.2008
(73) Proprietor: Koninklijke Philips Electronics N.V., 5621 BA Eindhoven (NL)
(72) Inventor: KODDEN, Hermanus, J., NL-5656 AA Eindhoven (NL); DAM, Peter, NL-5656 AA Eindhoven (NL)
(74) Representative: Uittenbogaard, Frank
(86) International application number: PCT/IB2006/054621
(87) International publication number: WO 2007/069135

(56) References cited:
- EP-A- 1 514 500
- WO-A-01/60221
- US-A- 5 388 501

## Description

The invention relates to a beverage preparation machine comprising a detachable liquid container, a riser pipe connectable with the liquid container and a liquid level sensor for sensing the liquid level within the riser pipe for determining the liquid level within the liquid container.

From EP 1 514 500 A1 a beverage preparation machine is known, which comprises a detachable liquid container. A riser pipe is arranged in the beverage preparation machine, which is connectable with the liquid container. Further a liquid level sensor for sensing the liquid level within the riser pipe for determining the liquid level within the liquid container is provided. This arrangement provides the advantage that the liquid level sensor does not have to be provided within the liquid container and that the sensing is relocated out of the liquid container. Thus, the liquid level sensor is present outside of the detachable liquid container and no detachable connection between the beverage preparation machine and the liquid level sensor, which is likely to fail, is required.

However, when adapting the liquid level sensing system of this beverage preparation machine to other beverage preparation machines, it can be observed that during the operation of these beverage preparation machines, the liquid level within the riser pipe is not always exactly the same as the liquid level within the liquid container.

It is therefore an object of the present invention to provide a beverage preparation machine which is able to sense the level of a liquid within a detachable liquid container more reliably.

This object is solved by a beverage preparation machine according to claim 1. Further advantageous developments are outlined in the dependent claims.

In accordance with the invention there is provided a beverage preparation machine comprising a detachable liquid container, a riser pipe connectable with the liquid container and a liquid level sensor for sensing the liquid level within the riser pipe for determining the liquid level within the liquid container, wherein the liquid container is provided with at least two liquid outlets, one being adapted to be connected to the riser pipe and one being adapted for supplying liquid intended to be used for preparing the beverage. In this beverage preparation machine the riser pipe is not branched off from a tube leading from the liquid container to a portion where the liquid is used for brewing. In such a tube a suction effect is caused when liquid is removed from the liquid container for consumption, and if the riser pipe would be branched off from this tube, the liquid level within the riser pipe would be influenced by this suction effect. Thus, the provision of the at least two liquid outlets ensures that the liquid level in the riser pipe is kept exactly the same as in the liquid container during the consumption of liquid and not influenced by the suction effect. This gives the advantage of measuring exactly the amount of liquid removed from the liquid container, which provides the opportunity to control the consumed quantity of liquid as accurate as possible.

According to the present invention it is preferred that the beverage preparation machine further comprises a pump for supplying liquid intended to be used for preparing the beverage, and being connectable with one of the outlets. When a pump is provided for pumping the liquid out of the liquid container, the above described suction effect is especially distinct. Therefore, this beverage preparation machine provides the advantage that the liquid level within the riser pipe is not influenced by the suction of the pump when conveying the liquid. Thus, it is ensured that the liquid level in the riser pipe is kept exactly the same as in the liquid container during pumping and not influenced by pump. This gives the advantage of measuring exactly the amount of water pumped out of the water container, which provides the opportunity to control the pumped quantity of liquid as accurate as possible.

According to the present invention it is preferred that the beverage preparation machine further comprises a valve for shutting off the riser pipe in a state in which the liquid container is detached from the beverage preparation machine. In use, the liquid level within the riser pipe is equal to the liquid level within the liquid container. This valve prevents that when a non-empty liquid container is removed, the remaining liquid within the riser pipe is not leaking out of a socket where the liquid container is detachable to.

A further development of the present invention is that each of the two outlets of the liquid container is provided with a valve for shutting off the outlets in a state in which the liquid container is detached from the beverage preparation machine. These valves prevent leaking of liquid out of the liquid container when the liquid container is detached in a non-empty state.

Moreover it is preferred that the liquid level sensor is an electrical liquid level sensor. This enables an easy processing of the sensed signals and avoids complex mechanical structures necessary for sensing and transmitting a mechanically sensed signal.

Further it is preferred that the riser pipe is adapted for receiving liquid from the boiler. This makes the construction of the appliance simpler, since no tube to the outside for the disposal of expansion water to the water container is required.

Moreover, it can be envisaged that each of the valves comprises a spool slidably supported by the liquid container and biased by a spring in a valve closing direction, wherein the valves are adapted to be openable by abutment of the spool against a protrusion formed in sockets connectable with the outlets. This arrangement provides the advantage of a simple structured implementation of the valves.

These and other aspects of the invention will be apparent from and elucidated with reference to the embodiment described hereinafter.
Fig. 1 shows a beverage preparation machine according to the present invention; and
Fig. 2 illustrates the connection between a detachable liquid container and the beverage preparation machine of Figure 1.

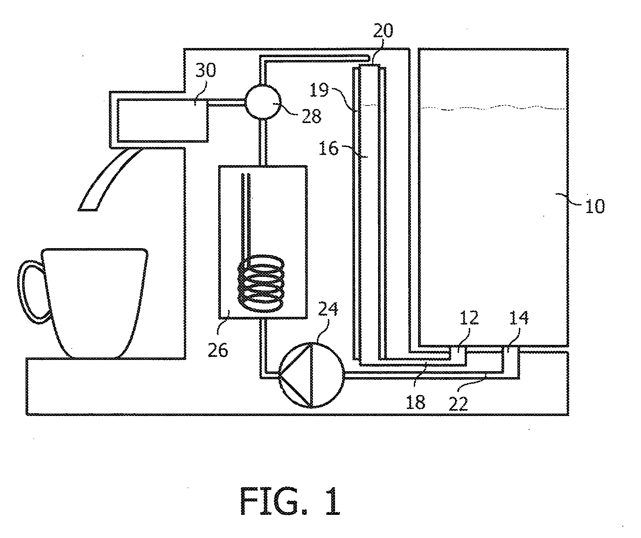

Figure 1 shows a beverage preparation machine according to the present invention. The beverage preparation machine comprises a detachable liquid container 10 for storing liquid, which is usually water or water comprising some additives. The beverage preparation machine is adapted to receive and hold the liquid container 10 such that later described connections are established with the beverage preparation machine in a state, in which the liquid container is installed in its designated position. Through the bottom of the liquid container 10 two outlets 12 and 14 are formed. If the detachable liquid container 10 is installed into the beverage preparation machine the outlet 12 is in communication with a riser pipe 16 via a connection member 18. The riser pipe 16 is an elongated cylindrical pipe whose longitudinal axis extends in the direction of gravity beyond the upper maximal filling level of the installed liquid container 10 (terms such as "upper" or "lower" refer in this detailed description to the directions as shown in the Figures). Upon installing the liquid container 10, a liquid level is established in the riser pipe 16 equal to the liquid level in the liquid container 10. This liquid level within the riser pipe 16 is detected by a liquid level sensor 19 which is preferably an electrical or electrical capacitive sensor. In such a capacitive sensor two electrodes are arranged within the riser pipe 16 such that they face each other and extend in the longitudinal direction of the riser pipe 16. The liquid within the riser pipe 16 acts as a dielectric such that the capacity of the capacitive sensor changes along with a changing liquid level within the riser pipe 16. In order to allow the liquid level within the riser pipe 16 to follow the liquid level within the liquid container 10 smoothly, the riser pipe 16 is opened at one end 20 thereof, which is the highest position of the riser pipe 16. If the detachable liquid container 10 is installed into the beverage preparation machine, the outlet 14 is in communication with a pump 24 via a tube 22. On the other side, the pump 24 is in communication, via a tube, with a boiler 26 for heating the liquid. The boiler 26 is in communication with a 3-way-valve 28. Additionally thereto, the 3-way-valve 26 is also in communication, via a tube, with a brewing chamber 30, and another tube branching off from the 3-way-valve 28 leads to the opened end 20 of the riser pipe 16 for leading expansion liquid from the boiler 26 to the riser pipe 16.

Upon starting the brewing operation in a state, in which the liquid container 10 is installed in the beverage preparation machine and the liquid level sensor 19 indicates that a predetermined minimal liquid level is present, the pump 24 sucks liquid out of the liquid container 10, pressurizes the liquid and conveys the liquid towards the boiler 26, where the liquid is heated to a temperature suitable for brewing ingredients, such as coffee. During heating up, the 3-way-valve 28 can selectively supply expansion liquid from the boiler 26 to the opened end 20 of the riser pipe 16. After heating up, the pressurized hot liquid is selectively directed by the 3-way-valve 28 towards the brewing chamber 30, where ingredients provided within the brewing chamber 30 are brewed and/or mixed using the pressurized hot liquid. Upon brewing, the extracted beverage is poured via a dispenser directly into a cup or glass. As soon as the liquid level sensor 19 indicates that the liquid level decreased below a minimal liquid level a starting or continuation of the pumping and heating is prohibited and a visual indicator may indicate a user that refilling of the detachable liquid container is required.

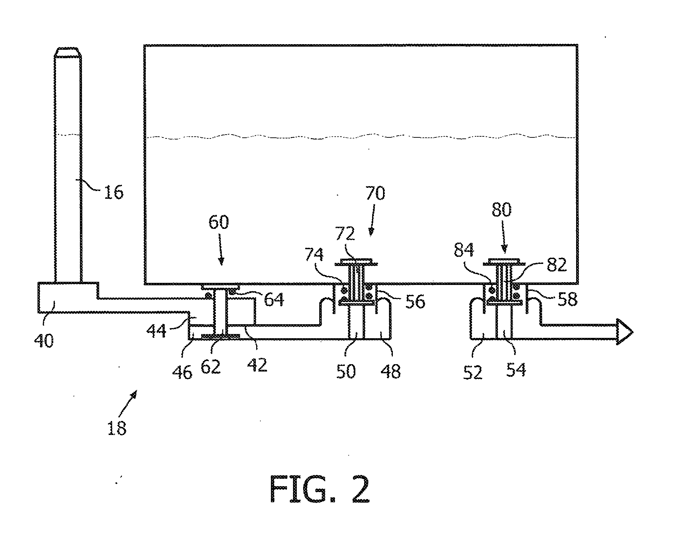

Figure 2 illustrates the connection between the detachable liquid container 10 and the beverage preparation machine of Figure 1. On a riser pipe side, the connection member 18 is formed with a bottomed cylindrical riser pipe socket 40 whose inner diameter is equal to or slightly smaller than the outer diameter of the riser pipe 16. The mounting of the riser pipe 16 into the riser pipe socket 40 is for example established by press fitting the riser pipe 16 into the riser pipe socket 40 or by adhesively bonding the riser pipe 16 into the riser pipe socket 40. The central portion of the connection member 18 forms a valve chamber, which is either cylindrical or cubical and divided by a dividing wall 42 into an upper valve chamber 44 and a lower valve chamber 46. The upper valve chamber 44 is connected with the riser pipe socket 40 through an elongated passage having preferably a rectangular cross section for reasons of an easier production. The lower valve chamber 42 is connected with a liquid container socket 48 through an elongated passage having preferably a rectangular cross-section. The liquid container socket 48 is of a bottomed cylindrical shape being opened on its upper side, wherein this opening has a certain circular cross-section. Inside the liquid container socket 48 a protrusion 50 is projecting from the bottom towards the opened side of the liquid container socket 48. The tube 22 leading to the pump 24 is provided on its liquid container side with a liquid container socket 52 which is basically identical to the first liquid container socket 48, wherein the projection of the liquid container socket 52 is indicated with reference numeral 54. Within the valve chamber of the connection member 18 there is provided a valve 60 as a check valve for opening/closing the communication between the upper and lower valve chambers 44 and 46. In detail, the valve 60 comprises a spool 62 being formed as a longitudinal cylindrical bar provided with disc-shaped ends of increased diameter at each longitudinal end thereof. The cylindrical portion of the spool 62 is provided with recesses formed on the outer diameter and extending in the longitudinal direction for allowing the passing of liquid in a state in with the valve 60 is opened. The spool 62 is arranged such that its cylindrical portion is slidably supported by the dividing wall 42 of the connection member 18. Additionally, the spool 62 is slidably and liquid-tightly supported by the upper wall of the valve chamber. The disc-shaped end of the spool 62, which is arranged in the lower valve chamber 46, is provided on its inner side with a sealing. Between the upper wall of valve chamber and the upper disc-shaped end of the spool 62, there is provided a spring 64 biasing the spool 62 in valve closing direction, such that the lower disc-shaped end of the spool 62 presses the respective sealing against the dividing wall 42 in order to shut the communication between the upper and lower valve chamber 44 and 46. From the bottom of the liquid container 10 two cylindrical outlet nozzles 56 and 58 are projecting downwards and are arranged coaxial with the outlets 12 and 14, respectively. Moreover, the outer diameters of the outlet nozzles 56 and 58 are equal to or slightly greater than the inner diameters of the respective liquid container sockets 48 and 52. The outlets 12 and 14 are respectively provided with valves 70 and 80 being structured identically. Each valve 70, 80 comprises a spool 72, 82 being formed as a longitudinal cylindrical bar provided with disc-shaped ends of increased diameter at each longitudinal end thereof. The cylindrical bar portion of the spool 72, 82 is slideably supported by the respective outlet 12, 14 and provided with recesses formed on the outer diameter and extending in the longitudinal direction for allowing the passing of liquid in a state in with the valve 70, 80 is opened. The disc-shaped end of the spool 72, 82, which is located within the liquid container 10, is provided with a sealing on its inner side, adapted to seal between the bottom of the liquid container 10 and the disc-shaped end of the spool 72, 82. Between the other disc-shaped end of the spool 72, 82 and the bottom of the liquid container 10 there is provided a spring 74, 84 biasing the respective spool 72, 82 in a valve closing direction, such that the disc-shaped end within the liquid container 10 presses the respective sealing against the bottom of the liquid container 10 and thus shuts the outlet 12, 14.

When the liquid container 10 is installed into the beverage preparation machine, the pipe nozzles 56 and 58 are pressed by the user into the opened ends of the liquid container sockets 48 and 52, such that a liquid-tight connection is established between the liquid container sockets 48, 52 and the outlet nozzles 56, 58. During this insertion of the liquid container 10, the lower ends of the spools 72, 82 abut against the projections 50 and 54. Due to the insertion force, which is acting against the biasing forces of the springs 74, 84, the projections 50 and 54 press the spools 72 and 82 in a valve opening direction. Thereby, liquid is enabled to flow from the liquid container 10 into the connection member 18 and the tube 22 which is in communication with the pump 24. During this insertion of the liquid container 10, also the upper end of the spool 62 is urged due to the insertion force by the bottom of the liquid container 10 against the biasing force of the spring 64 in a valve opening direction. Upon completion of the insertion, the liquid container 10 is in communication with the riser pipe 16 through the connection member 18, and the liquid container 10 is also in communication with the pump 26 via the separate tube 22. When the liquid container 10 is detached, the spools 62, 72 and 82 are biased by their respective springs 64, 74 and 84 into a valve closing direction in order to shut the valves 60, 70 and 80.

The above-described invention thus provides the advantage that the liquid level sensor 19 does not have to be provided within the liquid container and that the sensing is relocated out of the liquid container. Thus, the liquid level sensor 19 is present outside of the detachable liquid container and no detachable connection between the beverage preparation machine and the liquid level sensor 19, which is likely to fail, is required.

Equivalents and modifications not described above may also be employed without departing from the scope of the invention as defined in the accompanying claims. In the accompanying claims reference numerals are provided exclusively for an easier understanding of the claims. It is not intended in any way that these reference numerals shall limit the scope of the invention.

## Claims

1. A beverage preparation machine comprising a detachable liquid container (10), a riser pipe (16) connectable with the liquid container (10) and a liquid level sensor (19) for sensing the liquid level within the riser pipe (16) for determining the liquid level within the liquid container (10), **characterized in that** the liquid container (10) is provided with at least two liquid outlets (12, 14), one being adapted to be connected to the riser pipe (16) and one being adapted for supplying liquid intended to be used for preparing the beverage.

2. The beverage preparation machine according to claim 1, further comprising a pump (24) for supplying liquid intended to be used for preparing the beverage, and being connectable with one of the outlets (14).

3. The beverage preparation machine according to claim 1, wherein the beverage preparation machine further comprises a valve (60) for shutting off the riser pipe (60) in a state in which the liquid container (10) is detached from the beverage preparation machine.

4. The beverage preparation machine according to claim 1, wherein each of the two outlets (12, 14) of the liquid container (10) is provided with a valve (70, 80) for shutting off the outlets (12, 14) in a state in which the liquid container (10) is detached from the beverage preparation machine.

5. The beverage preparation machine according to claim 1, wherein the liquid level sensor (19) is an electrical liquid level sensor.

6. The beverage preparation machine according to claim 1, wherein the riser pipe (16) is adapted for receiving liquid from the boiler (26).

7. The beverage preparation machine according to claim 4, wherein each of the valves (70, 80) comprises a spool (72, 82) slidably supported by the liquid container (10) and biased by a spring (74, 84) in a valve closing direction, wherein the valves (70, 80) are adapted to be openable by abutment of the spool (72, 82) against a protrusion (50, 54) formed in sockets (48, 52) connectable with the outlets (12, 14).

## Patentansprüche

1. Getränkezubereitungsmaschine mit einem abnehmbaren Flüssigkeitsbehälter (10), einem an den Flüssigkeitsbehälter (10) anschließbaren Steigrohr (16) sowie einem Flüssigkeitspegelsensor (19) zum Messen des Flüssigkeitspegels innerhalb des Steigrohrs (16), um den Flüssigkeitspegel innerhalb des Flüssigkeitsbehälters (10) zu ermitteln, **dadurch gekennzeichnet, dass** der Flüssigkeitsbehälter (10) mit mindestens zwei Flüssigkeitsaustrittsöffnungen (12, 14) versehen ist, wobei eine so ausgebildet ist, dass sie mit dem Steigrohr (16) verbunden ist, und eine so ausgebildet ist, dass sie Flüssigkeit, die zur Zubereitung des Getränks verwendet werden soll, zuführt.

2. Getränkezubereitungsmaschine nach Anspruch 1, welche weiterhin eine Pumpe (24) umfasst, die Flüssigkeit, die zur Zubereitung des Getränks verwendet werden soll, zuführt und an eine der Austrittsöffnungen (14) anschließbar ist.

3. Getränkezubereitungsmaschine nach Anspruch 1, wobei die Getränkezubereitungsmaschine weiterhin ein Ventil (60) umfasst, um das Steigrohr (60) in einem Zustand zu sperren, in dem der Flüssigkeitsbehälter (10) von der Getränkezubereitungsmaschine abgenommen worden ist.

4. Getränkezubereitungsmaschine nach Anspruch 1, wobei jede der beiden Austrittsöffnungen (12, 14) des Flüssigkeitsbehälters (10) mit einem Ventil (70, 80) versehen ist, um die Austrittsöffnungen (12, 14) in einem Zustand zu sperren, in dem der Flüssigkeitsbehälter (10) von der Getränkezubereitungsmaschine abgenommen worden ist.

5. Getränkezubereitungsmaschine nach Anspruch 1, wobei der Flüssigkeitspegelsensor (19) ein elektrischer Flüssigkeitspegelsensor ist.

6. Getränkezubereitungsmaschine nach Anspruch 1, wobei das Steigrohr (16) so ausgebildet ist, dass es Flüssigkeit aus dem Boiler (26) aufnimmt.

7. Getränkezubereitungsmaschine nach Anspruch 4, wobei jedes der Ventile (70, 80) einen Schieber (72, 82) umfasst, der von dem Flüssigkeitsbehälter (10) verschiebbar getragen und von einer Feder (74, 84) in einer das Ventil schließenden Richtung vorgespannt wird, wobei die Ventile (70, 80) so ausgebildet sind, dass sie durch Anliegen des Schiebers (72, 82) gegen einen in Sockeln (48, 52) ausgebildeten Vortritt (50, 54), der an die Austrittsöffnungen (12, 14) anschließbar ist, zu öffnen sind.

## Revendications

1. Machine de préparation de boisson comprenant un conteneur de liquide détachable (10), une conduite ascensionnelle (16) pouvant être raccordée au conteneur de liquide (10) et un capteur de niveau de liquide (19) destiné à détecter le niveau de liquide à l'intérieur de la conduite ascensionnelle (16) et à déterminer le niveau de liquide à l'intérieur du conteneur de liquide (10), **caractérisée en ce que** le conteneur de liquide (10) est pourvu d'au moins deux sorties de liquide (12, 14), l'une étant conçue pour être raccordée à la conduite ascensionnelle (16) et l'une étant conçue pour amener le liquide destiné à être utilisé pour préparer la boisson.

2. Machine de préparation de boisson selon la revendication 1, comprenant en outre une pompe (24) destinée à amener le liquide à utiliser pour préparer la boisson, et pouvant être raccordée à l'une des sorties (4).

3. Machine de préparation de boisson selon la revendication 1, la machine de préparation de boisson comprenant en outre une soupape (60) destinée à couper la conduite ascensionnelle (60) dans un état dans lequel le conteneur de liquide (10) est détaché de la machine de préparation de boisson.

4. Machine de préparation de boisson selon la revendication 1, chacune des deux sorties (12, 14) du conteneur de liquide (10) étant pourvue d'une soupape (70, 80) destinée à couper les sorties (12, 14) dans un état dans lequel le conteneur de liquide (10) est détaché de la machine de préparation de boisson.

5. Machine de préparation de boisson selon la revendication 1, le capteur de niveau de liquide (19) étant un capteur de niveau de liquide électrique.

6. Machine de préparation de boisson selon la revendication 1, la conduite ascensionnelle (16) étant conçue pour recevoir le liquide provenant de la chaudière (26).

7. Machine de préparation de boisson selon la revendication 4, chacune des soupapes (70, 80) comprenant un tiroir cylindrique (72, 82) porté coulissant par le conteneur de liquide (10) et sollicité par un ressort (74, 84) dans une direction de fermeture de soupape, les soupapes (70, 80) étant conçues pour pouvoir être ouvertes par la butée du tiroir cylindrique (72, 82) contre une saillie (50, 54) formée dans des douilles (48, 52) pouvant être raccordées aux sorties (12, 14).
